# EUROPEAN PATENT APPLICATION

(11) **EP 4 810 555 A1**
(43) Date of publication of application: **23.09.2026**
(21) Application number: 26164927.1
(22) Date of filing: 16.03.2026
(51) Int. Cl.: C08K 5/5313, C08K 5/5317, C08K 5/526, C08K 5/134, C08L 77/02, C08L 77/06

(54) **POLYMER ADDITIVE AND PREPARATION METHOD THEREFOR, AND POLYMER COMPOSITION CONTAINING SAME**

(30) Priority: 17.03.2025 CN 202510311146
(71) Applicant: KINGFA SCI. & TECH. CO., LTD., Guangzhou, Guangdong 510663 (CN); Liaoning Kingfa Biomaterial Co., Ltd., Panjin City, Liaoning Province 124000 (CN)
(72) Inventor: Li, Jide, Guangzhou, Guangdong, 510663 (CN); Chen, Pingxu, Guangzhou, Guangdong, 510663 (CN); Ye, Nanbiao, Guangzhou, Guangdong, 510663 (CN); Jing, Xinke, Guangzhou, Guangdong, 510663 (CN); Liu, Zhen, Guangzhou, Guangdong, 510663 (CN); Tan, Xiaobin, Guangzhou, Guangdong, 510663 (CN); Tang, Ming, Guangzhou, Guangdong, 510663 (CN)
(74) Representative: Petraz, Gilberto Luigi

(57) **Abstract**

The present invention provides a polymer additive and a preparation method therefor, and a polymer composition containing the same. The preparation method includes: allowing an aqueous solution of a hypophosphite and an antioxidant to carry out a free radical reaction with ethylene in the presence of an initiator to obtain an aqueous solution of a diethylphosphinate; mixing the aqueous solution of the diethylphosphinate, an aqueous solution of a metal salt, and an alkali solution to carry out a reaction under a condition of a pH value of 3.5-3.8 to obtain a diethylphosphinate metal salt slurry; and mixing and stirring the diethylphosphinate metal salt slurry and a flocculant to obtain a diethylphosphinate metal salt flocculate, and performing filtering, washing, and drying to obtain the polymer additive. According to the present invention, through the design of the preparation method, the polymer additive with a low acid value and high thermal stability can be obtained. When used as a flame retardant to prepare the polymer composition, the polymer additive can reduce mold scale during injection molding and enable the polymer composition to have less water boiling precipitate, thereby improving the stability of the polymer composition under damp-heat conditions.

## Description

### TECHNICAL FIELD

The present invention belongs to the technical field of flame retardants, and particularly relates to a polymer additive and a preparation method therefor, and a polymer composition containing the same.

### BACKGROUND

Dialkylphosphinate is a universal halogen-free environmentally friendly flame retardant, which has the characteristics of good flame retardant performance, a low addition amount, and minimal impact on physical and electrical properties of base resins; and more importantly, materials using the dialkylphosphinate as a flame retardant have characteristics such as high CTI (comparative tracking index) and low smoke emission during combustion, and meanwhile, have superior mechanical and electrical properties, thus having been increasingly favored by manufacturers in the electrical engineering and electrical appliance industry, and having a very broad market application prospect.

With the widespread application of the dialkylphosphinate, its non-negligible performance defects have been gradually discovered. For example, it has been found by Braun U, et al. in research that the dialkylphosphinate is decomposed into dialkylphosphinic acid during a high-temperature process when used for flame retardation of polybutylene terephthalate (PBT) and polyamides. Particularly, when the dialkylphosphinate is used for flame retardation of polyamides, since the polyamides have numerous polar amide groups, the polyamides are prone to moisture absorption and have a higher water absorption rate. For example, a PA66 resin can reach a water absorption rate of 2.7% under conditions of 23°C and a humidity of 50%. During extrusion processing or high-temperature injection molding processing, the dialkylphosphinate itself possesses certain acidity and is also decomposed into an acidic substance of dialkylphosphinic acid, thereby easily promoting system decomposition and leading to high gas generation during processing. During repeated injection molding many times, severe mold scale often appears on molds, which not only seriously affects the appearance of products, but also requires frequent mold cleaning, leading to low production efficiency and making it difficult to achieve better popularization and use of the products.

Currently, the main method to solve the problem of mold scale on flame-retardant polyamide materials using the dialkylphosphinate during injection molding is to add an acid absorbent into the system to reduce the acidity of the system. For example, in a halogen-free and flame-retardant polyamide composition disclosed in EP2417191A1, 0.15-1 wt% of calcium oxide is added, which neutralizes with certain acidic substances in the system to reduce the acidity of the system and decrease the decomposition of a matrix resin, thereby effectively reducing mold corrosion during high-temperature injection molding. Although the method is somewhat helpful in reducing mold scale, the calcium oxide is highly hygroscopic, leading to a high water absorption rate of the system and making it more difficult to control the system during processing.

In a halogen-free and flame-retardant thermoplastic polyamide composition disclosed in CN112409786A, by adding a certain quantity of an ethylene copolymer as an adsorbent, the amount of mold scale generated during injection molding is decreased. In a halogen-free and flame-retardant polyamide composite material disclosed in CN114874616A, by introducing a compound system of a metal oxide and a polyhydroxy ingredient, the prepared polyamide material has better yellowing resistance, lower mold scale, and a higher number of times of continuous mold opening and closing.Although the above methods have a certain effect in ameliorating the mold scale of flame-retardant polyamides using the dialkylphosphinate, all of them adopt the method of externally adding an auxiliary agent to improve the acidity of the system and reduce mold scale, thereby increasing costs and meanwhile making it difficult to avoid impacts of newly added substances on other properties of the flame-retardant polyamides. For example, the addition of inorganic metal oxides will lead to a decrease in mechanical properties of materials. Moreover, the dialkylphosphinate itself has insufficient heat resistance and exhibits an obvious weight loss phenomenon at a high temperature above 300°C, leading to decomposition during processing such as melt blending and extrusion, thereby affecting the exertion of properties. The method of externally adding an auxiliary agent does not fundamentally solve the problem of insufficient heat resistance of the dialkylphosphinate.

Therefore, providing a flame retardant additive with lower acidity and better thermal stability to enable that a polymer composition using the same has lower mold scale and less additive precipitation is a current problem to be solved urgently in the field.

### SUMMARY

In view of the shortcomings of the prior art, an objective of the present invention is to provide a polymer additive and a preparation method therefor, and a polymer composition containing the same. Through the design and interaction of raw materials, process steps, and parameters in the preparation method, the polymer additive with a low acid value and high thermal stability can be obtained. When used as a flame retardant to prepare a polymer composition, the polymer additive not only effectively reduces mold scale, but also enables the polymer composition to have a lower water boiling precipitate content, thereby prolonging the service life under damp-heat conditions.

To achieve the objective, the present invention adopts the following technical solutions.

In a first aspect, the present invention provides a preparation method for a polymer additive, where the preparation method includes the following steps:
(1) allowing an aqueous solution of a hypophosphite and an antioxidant to carry out a free radical reaction with ethylene in the presence of an initiator to obtain an aqueous solution of a diethylphosphinate;
(2) mixing the aqueous solution of the diethylphosphinate, an aqueous solution of a metal salt, and an alkali solution to carry out a reaction under a condition of a pH value of 3.5-3.8 to obtain a diethylphosphinate metal salt slurry; and
(3) mixing and stirring the diethylphosphinate metal salt slurry and a flocculant to obtain a diethylphosphinate metal salt flocculate; and filtering, washing, and drying the diethylphosphinate metal salt flocculate to obtain the polymer additive.

It has been found through research in the present invention that by adding the antioxidant during the step (1), a water-soluble acid value and an organic acid value of the product can be effectively decreased. The reason is that the reaction of the hypophosphite and the ethylene is generally carried out under the initiation of a free radical initiator, and the hypophosphite contains a P-H bond with strong reducibility. Thus, the free radical reaction and an oxidation reaction occur simultaneously in the step (1). By introducing the antioxidant in the present invention, electrons can be donated to an oxidant, thereby reducing it to a relatively stable substance. Meanwhile, the free radical reaction of the hypophosphite and the ethylene is a strongly exothermic reaction, which is prone to generating uncontrollable phenomena and numerous side reactions during production. The antioxidant captures free radicals in the form of reacting with the free radicals to neutralize their activity, which can effectively slow down an exothermic effect and reduce the occurrence of side reactions, thus making a production process controllable.

Further, it has been found through research in the present invention that the pH of the reaction system has a significant impact on crystallization behaviors of the additive during precipitation, thereby affecting the acid value of the product. In the present invention, the pH value of the system in the step (2) is controlled to be 3.5-3.8, and for example, may be 3.52, 3.55, 3.58, 3.6, 3.62, 3.65, 3.68, 3.7, 3.72, 3.75, 3.78, etc.; and within the range, the polymer additive with excellent performance, especially with a low acid value and excellent heat resistance, can be prepared, and when used as a flame retardant to prepare a composite material, has lower mold scale and a lower water boiling precipitate content. If the pH value of the reaction system in the step (2) is too low, it easily leads to excessive acidity of the polymer additive and reduced thermal stability; and if the pH value of the reaction system is too high, it also leads to an increase in acid value of the polymer additive, and a continued increase in pH also leads to a decrease in yield.

Additionally, a main effect of the flocculant is to utilize groups with positive (negative) electricity and some pellets or particles with negative (positive) electricity in water that are difficult to separate to get close to each other to reduce their potential and make them stay in an unstable state, and to use their polymerization properties to aggregate these particles and then separate the particles by a physical or chemical method. When the flocculant is used for flocculation of the polymer additive of the present invention, through adsorption bridging and enhancement effects, surfaces of particles of the polymer additive are fixed to molecular chains of the flocculant to form bridges of a polymer, thereby enabling the particles to form an aggregate and settle. The flocculant adsorbs and binds a diethylphosphinate metal salt in the slurry obtained in the step (2), which can effectively improve filtration and washing effects of the polymer additive, and meanwhile, can reduce the acidity of the polymer additive after filtration and washing.

In summary, the preparation method for a polymer additive is specially designed in the present invention. By using the antioxidant and the flocculant during preparation and controlling the pH value of a double decomposition reaction process to be 3.5-3.8, the polymer additive with a low acid value and excellent thermal stability is obtained. When used as a flame retardant to prepare a polymer composition, the polymer additive can significantly reduce mold scale and enable the polymer composition to have a lower water boiling precipitate content, thereby greatly improving the stability of the polymer composition under damp-heat conditions and prolonging the service life.

The following shows preferred technical solutions of the present invention, but is not intended to limit the technical solutions provided by the present invention. Through the following preferred technical solutions, the objectives and beneficial effects of the present invention can be better achieved and realized.

Preferably, the hypophosphite includes sodium hypophosphite and/or potassium hypophosphite, thereby obtaining an aqueous solution of sodium diethylphosphinate and/or an aqueous solution of potassium diethylphosphinate.

It should be noted that the hypophosphite may be an anhydrous hypophosphite and/or a hypophosphite hydrate.

Preferably, the hypophosphite is sodium hypophosphite, and an aqueous solution of sodium diethylphosphinate is obtained in the step (1).

Preferably, a mass percentage content of the hypophosphite in the aqueous solution of the hypophosphite is 10-60%, and for example, may be 15%, 20%, 25%, 30%, 35%, 40%, 45%, 50%, or 55%, as well as specific point values among the above point values. Due to space limitations and for the sake of brevity, the specific point values included within the range are not exhaustively enumerated in the present invention. The mass percentage content is further preferably 30-40%.

Preferably, the antioxidant includes any one or a combination of at least two of a hindered amine antioxidant, a hindered phenol antioxidant, a phosphite ester antioxidant, and a thioester antioxidant, further preferably any one or a combination of at least two of a hindered phenol antioxidant, a phosphite ester antioxidant, and a thioester antioxidant.

Further preferably, the antioxidant includes any one or a combination of at least two of pentaerythritol tetrakis(β-(3,5-di-tert-butyl-4-hydroxyphenyl)propionate) (antioxidant 1010), n-octadecyl β-(3,5-di-tert-butyl-4-hydroxyphenyl)propionate (antioxidant 1076), *N,N'*-bis-(3-(3,5-di-tert-butyl-4-hydroxyphenyl)propionyl)hexamethylenediamine (antioxidant 1098), tris(2,4-di-tert-butylphenyl) phosphite (antioxidant 168), 2,6-di-tert-butyl-p-cresol (antioxidant BHT), distearyl β,β-thiodipropionate (antioxidant DSTP), antioxidant 215, and antioxidant 225.

The antioxidant in the present invention may adopt a single component, such as any one of the antioxidants listed above, or a compound antioxidant formed by compounding multiple components, such as a combination of a hindered phenol antioxidant and a phosphite ester antioxidant. Typical combinations are complexes of antioxidant 1010 and antioxidant 168 in different ratios, such as antioxidant 215, antioxidant 225, etc.

Preferably, a mass ratio of the hypophosphite to the antioxidant is 100:(0.02-1.2), for example, may be 100:0.04, 100:0.05, 100:0.06, 100:0.08, 100:0.1, 100:0.2, 100:0.3, 100:0.4, 100:0.5, 100:0.6, 100:0.7, 100:0.8, 100:0.9, 100:0.95, 100:1, 100:1.05, 100:1.1, or 100:1.15, etc., and is further preferably 100:(0.05-1).

Preferably, the initiator includes any one or a combination of at least two of an organic peroxide, a persulfate, an azo initiator, and a photoinitiator.

Preferably, the organic peroxide includes any one or a combination of at least two of diisobutyryl peroxide, benzoyl peroxide, bis(2-ethylhexyl) peroxydicarbonate, diisopropyl peroxydicarbonate, 1,1,3,3-tetramethylbutyl peroxypivalate, tert-butyl peroxypivalate, tert-amyl peroxypivalate, dilauroyl peroxide, di(3,3,5-trimethylacetyl) peroxide, 2,5-dimethyl-2,5-di(2-ethylacetylperoxy)hexane, 1,1,3,3-tetramethylbutyl peroxy-2-ethylhexanoate, di(4-methylbenzoyl) peroxide, tert-amyl peroxy-2-ethylhexanoate, tert-butyl peroxy-2-ethylhexanoate, tert-butyl peroxyisobutyrate, 1,1-di-tert-butyl peroxy-3,3,5-trimethylcyclohexane, 1,1-bis(tert-amylperoxy)cyclohexane, 1,1-bis(tert-butylperoxy)cyclohexane, di-tert-butyl peroxide, di-tert-amyl peroxide, diisopropylbenzene peroxide, 2,5-di-tert-butyl peroxy-2,5-dimethylhexane, tert-butyl peroxyacetate, tert-amyl peroxybenzoate, tert-butyl peroxymaleate, and tert-butyl peroxy-2-ethylhexylcarbonate.

Preferably, the persulfate includes any one or a combination of at least two of sodium persulfate, potassium persulfate, and ammonium persulfate.

Preferably, the azo initiator includes any one or a combination of at least two of azobisisobutyronitrile, azobisisoheptonitrile, 2,2'-azobis(2-methylpropionamidine) dihydrochloride, 2,2'-azobis[2-(2-imidazolin-2-yl)propane] dihydrochloride, and 1-((cyano-1-methylethyl)azo)formamide.

It should be noted that the specific selection of the photoinitiator is not particularly limited in the present invention, and commonly used photoinitiators in the field are all applicable.

It should be noted that the initiator in the step (1) of the present invention may be added at once, in batches, or continuously during the reaction process; and moreover, a portion of the initiator in the step (1) may also be added in advance, while the remaining portion is continuously added during the reaction process.

Preferably, a mass ratio of the hypophosphite to the initiator is 100:(0.1-5), and for example, may be 100:0.2, 100:0.5, 100:1, 100:1.5, 100:2, 100:2.5, 100:3, 100:3.5, 100:4, 100:4.5, or 100:4.8, etc.

Preferably, a molar ratio of the ethylene to the hypophosphite is (2-2.1):1, and for example, may be 2.01:1, 2.02:1, 2.04:1, 2.05:1, 2.06:1, 2.08:1, or 2.09:1, etc.

Preferably, a temperature of the free radical reaction is 70-120°C, and for example, may be 75°C, 80°C, 85°C, 90°C, 95°C, 100°C, 105°C, 110°C, or 115°C, as well as specific point values among the above point values. Due to space limitations and for the sake of brevity, the specific point values included within the range are not exhaustively enumerated in the present invention. The temperature is more preferably 80-110°C, further preferably 90-105°C.

The free radical reaction in the step (1) is carried out in the presence of the initiator, and when the pressure of the reaction system essentially no longer changes, the reaction may be considered complete and stopped.

Preferably, the free radical reaction is carried out under a protective atmosphere.

Preferably, the protective atmosphere includes a nitrogen atmosphere and/or an argon atmosphere.

In the present invention, the metal salt in the step (2) is a water-soluble metal salt, and preferably, the metal salt includes a metal sulfate and/or a metal chloride, more preferably a metal sulfate.

Preferably, a metal in the metal salt includes any one or a combination of at least two of Al, Ca, Cu, Zn, Fe, and Ti, further preferably Al.

Preferably, the metal salt includes aluminum sulfate.

It should be noted that the metal salt may be an anhydrous metal salt and/or a metal salt hydrate.

Preferably, a mass percentage content of the metal salt in the aqueous solution of the metal salt is 20-40%, and for example, may be 22%, 25%, 28%, 30%, 32%, 35%, or 38%, as well as specific point values among the above point values. Due to space limitations and for the sake of brevity, the specific point values included within the range are not exhaustively enumerated in the present invention.

Preferably, a molar ratio of the metal salt to the diethylphosphinate is 1:(5.8-6.2), for example, may be 1:5.82, 1:5.85, 1:5.88, 1:5.9, 1:5.92, 1:5.95, 1:5.98, 1:6, 1:6.02, 1:6.05, 1:6.08, 1:6.1, 1:6.12, 1:6.15, or 1:6.18, etc., and is further preferably 1:6.

Preferably, the alkali solution includes a sodium hydroxide solution and/or a potassium hydroxide solution.

The mass concentration of the sodium hydroxide solution or the potassium hydroxide solution is not particularly limited in the present invention, and only the sodium hydroxide solution and/or the potassium hydroxide solution needs to be added to maintain the pH of the reaction system obtained in the step (2) at 3.5-3.8.

Preferably, a temperature of the reaction in the step (2) is 20-80°C, and for example, may be 25°C, 30°C, 35°C, 40°C, 45°C, 50°C, 55°C, 60°C, 65°C, 70°C, or 75°C, as well as specific point values among the above point values. Due to space limitations and for the sake of brevity, the specific point values included within the range are not exhaustively enumerated in the present invention. The temperature is further preferably 40-60°C.

Preferably, a time of the reaction in the step (2) is 0.1-5 h, and for example, may be 0.2 h, 0.5 h, 0.8 h, 1 h, 1.2 h, 1.5 h, 1.8 h, 2 h, 2.2 h, 2.5 h, 2.8 h, 3 h, 3.2 h, 3.5 h, 3.8 h, 4 h, or 4.5 h, as well as specific point values among the above point values. Due to space limitations and for the sake of brevity, the specific point values included within the range are not exhaustively enumerated in the present invention.

It should be noted that in the step (2) of the present invention, the aqueous solution of the metal salt and the alkali solution are simultaneously added into the aqueous solution of the diethylphosphinate to carry out the reaction, or the aqueous solution of the metal salt, the alkali solution, and the aqueous solution of the diethylphosphinate are continuously added into a reaction device (such as a stirred reactor, a static mixer, or a dynamic mixer) at a constant flow rate to carry out a thorough mixing reaction. When the aqueous solution of the metal salt and the alkali solution are simultaneously added into the aqueous solution of the diethylphosphinate to carry out the reaction, the reaction temperature is 20-80°C, preferably 30-70°C, and further preferably 40-60°C, and the dropwise addition time of the aqueous solution of the metal salt and the alkali solution is 0.1-5 h (for example, 0.5 h, 1 h, 1.5 h, 2 h, 2.5 h, 3 h, 3.5 h, 4 h, 4.5 h, etc.), preferably 0.5-3 h, and further preferably 1-3 h; and when the aqueous solution of the metal salt, the alkali solution, and the aqueous solution of the diethylphosphinate are continuously added into a reaction vessel at a constant flow rate, the reaction temperature is 40-80°C, preferably 50-60°C, and the reaction space velocity is 0.1-2 /h (for example, 0.2 /h, 0.5 /h, 0.8 /h, 1 /h, 1.2 /h, 1.5 /h, 1.8 /h, etc.), preferably 0.3-1 /h, and further preferably 0.5-0.8 /h.

Preferably, the flocculant includes any one or a combination of at least two of a polyacrylamide flocculant, a starch flocculant, and a chitin flocculant.

Further preferably, the flocculant includes anionic polyacrylamide and/or nonionic polyacrylamide.

As a preferred technical solution of the present invention, the use of the polyacrylamide flocculant (preferably the anionic polyacrylamide and/or the nonionic polyacrylamide) enables surfaces of particles of the polymer additive to be fixed on molecular chains of the flocculant to form bridges of a polymer. Particularly, when the anionic polyacrylamide is used as the flocculant, adsorption bridging and enhancement effects can be generated, thereby enabling the particles to form an aggregate and settle, improving filtration and washing effects of the polymer additive, and reducing the acid value of the polymer additive after filtration and washing.

Preferably, based on a theoretical mass of the diethylphosphinate metal salt as 100%, a mass of the flocculant is 0.01-0.5%, and for example, may be 0.02%, 0.05%, 0.08%, 0.1%, 0.12%, 0.15%, 0.18%, 0.2%, 0.22%, 0.25%, 0.28%, 0.3%, 0.32%, 0.35%, 0.38%, 0.4%, 0.42%, 0.45%, or 0.48%, as well as specific point values among the above point values. Due to space limitations and for the sake of brevity, the specific point values included within the range are not exhaustively enumerated in the present invention.

The "theoretical mass of the diethylphosphinate metal salt" is calculated based on the input amounts of the diethylphosphinate and the metal salt in the step (2).

Preferably, the flocculant may be first mixed with water at 20-30°C for 10-20 min to obtain a flocculant solution, and then the flocculant solution is mixed and stirred with the diethylphosphinate metal salt slurry. A mass ratio of the flocculant to the water is 1:(10-1000), and for example, may be 1:50, 1:100, 1:200, 1:300, 1:400, 1:500, 1:600, 1:700, 1:800, 1:900, or 1:950, etc.

Preferably, a temperature of the mixing in the step (3) is 40-60°C, and for example, may be 42°C, 44°C, 46°C, 48°C, 50°C, 52°C, 54°C, 56°C, or 58°C, as well as specific point values among the above point values. Due to space limitations and for the sake of brevity, the specific point values included within the range are not exhaustively enumerated in the present invention.

Preferably, a number of times of the washing in the step (3) is ≥ 4 times, for example, may be 5 times, 6 times, 7 times, 8 times, 9 times, 10 times, or 12 times, etc., and is further preferably 5-10 times.

Preferably, a washing reagent used for the washing is water.

As a preferred technical solution of the present invention, the diethylphosphinate metal salt flocculate is filtered and then washed several times, with a number of times of the washing being ≥ 4 times, preferably 5-10 times, which can better remove impurities and acidic substances in the product, thereby obtaining the polymer additive with a lower acid value and better thermal stability.

Preferably, a mass ratio of water to a solid during the washing each time is each independently (1-10):1, for example, may be 2:1, 3:1, 4:1, 5:1, 6:1, 7:1, 8:1, 9:1, etc., and is further preferably (1.5-6):1; and the solid refers to a solid product obtained by filtration.

Preferably, a temperature of the drying in the step (3) is 105-250°C, and for example, may be 110°C, 120°C, 130°C, 140°C, 150°C, 160°C, 180°C, 200°C, 220°C, or 240°C, as well as specific point values among the above point values. Due to space limitations and for the sake of brevity, the specific point values included within the range are not exhaustively enumerated in the present invention. The temperature is further preferably 110-150°C.

As a preferred technical solution of the present invention, the preparation method for a polymer additive specifically includes the following steps:
(1) allowing an aqueous solution of a hypophosphite and an antioxidant to carry out a free radical reaction with ethylene in the presence of an initiator under a protective atmosphere to obtain an aqueous solution of a diethylphosphinate,
   where a mass percentage content of the hypophosphite in the aqueous solution of the hypophosphite is 10-60%, a mass ratio of the hypophosphite to the antioxidant to the initiator is 100:(0.02-1.2):(0.1-5), a temperature of the free radical reaction is 70-120°C, and the reaction is terminated when the pressure of the system no longer changes;
(2) mixing the aqueous solution of the diethylphosphinate, an aqueous solution of a metal salt, and an alkali solution to carry out a reaction under conditions of a pH value of 3.5- 3.8 and 40-60°C to obtain a diethylphosphinate metal salt slurry,
   where a molar ratio of the metal salt to the diethylphosphinate is 1:(5.9-6.1), and a mass percentage content of the metal salt in the aqueous solution of the metal salt is 20-40%; and
(3) mixing and stirring the diethylphosphinate metal salt slurry and a flocculant solution at 40-60°C to obtain a diethylphosphinate metal salt flocculate; and filtering the diethylphosphinate metal salt flocculate, followed by washing ≥ 4 times and drying to obtain the polymer additive,
where based on a theoretical mass of the diethylphosphinate metal salt as 100%, a mass of the flocculant is 0.01-0.5%.

In a second aspect, the present invention provides a polymer additive, where the polymer additive is prepared by the preparation method as described in the first aspect, and a water-soluble acid value of the polymer additive is ≤ 0.33 mg KOH/g; and the polymer additive includes, in parts by mass, the following components:
96-99.88 parts of a diethylphosphinate,
0.1-2 parts of an ethylbutylphosphinate,
0.01-1 part of an ethylphosphonate, and
0.01-1 part of a monoethylphosphinate.

The polymer additive provided by the present invention has a low acid value and excellent thermal stability, with a water-soluble acid value ≤ 0.33 mg KOH/g. When used as a flame retardant in a polymer composition, the polymer additive can inhibit the generation of dialkylphosphonic acid by high-temperature decomposition and enable the polymer composition to have a lower water boiling precipitate content, thereby effectively improving the use stability under damp-heat conditions and prolonging the service life. Moreover, the amount of mold fouling generated during injection molding is lower.

The diethylphosphinate in the polymer additive is 96-99.88 parts by mass, and for example, may be 96 parts, 96.2 parts, 96.5 parts, 96.8 parts, 96.9 parts, 97 parts, 97.2 parts, 97.5 parts, 97.8 parts, 98 parts, 98.2 parts, 98.5 parts, 98.8 parts, 99 parts, 99.2 parts, 99.5 parts, 99.6 parts, or 99.8 parts, as well as specific point values among the above point values. Due to space limitations and for the sake of brevity, the specific point values included within the range are not exhaustively enumerated in the present invention.

Preferably, a mass percentage content of the diethylphosphinate in the polymer additive is ≥ 95%, and for example, may be 95.5%, 96%, 96.2%, 96.5%, 96.8%, 97%, 97.2%, 97.5%, 97.8%, 98%, 98.2%, 98.5%, 98.8%, 99%, 99.2%, 99.5%, 99.8%, or 99.88%, as well as specific point values among the above point values. Due to space limitations and for the sake of brevity, the specific point values included within the range are not exhaustively enumerated in the present invention.

The ethylbutylphosphinate in the polymer additive is 0.1-2 parts by mass, and for example, may be 0.12 part, 0.15 part, 0.2 part, 0.25 part, 0.3 part, 0.4 part, 0.5 part, 0.6 part, 0.8 part, 1 part, 1.2 parts, 1.5 parts, or 1.8 parts, as well as specific point values among the above point values. Due to space limitations and for the sake of brevity, the specific point values included within the range are not exhaustively enumerated in the present invention.

The ethylphosphonate in the polymer additive is 0.01-1 part by mass, and for example, may be 0.02 part, 0.05 part, 0.1 part, 0.15 part, 0.2 part, 0.25 part, 0.3 part, 0.35 part, 0.4 part, 0.45 part, 0.5 part, 0.55 part, 0.6 part, 0.65 part, 0.7 part, 0.75 part, 0.8 part, 0.85 part, 0.9 part, or 0.95 part, as well as specific point values among the above point values. Due to space limitations and for the sake of brevity, the specific point values included within the range are not exhaustively enumerated in the present invention.

The monoethylphosphinate in the polymer additive is 0.01-1 part by mass, and for example, may be 0.02 part, 0.05 part, 0.1 part, 0.15 part, 0.2 part, 0.25 part, 0.3 part, 0.35 part, 0.4 part, 0.45 part, 0.5 part, 0.55 part, 0.6 part, 0.65 part, 0.7 part, 0.75 part, 0.8 part, 0.85 part, 0.9 part, or 0.95 part, as well as specific point values among the above point values. Due to space limitations and for the sake of brevity, the specific point values included within the range are not exhaustively enumerated in the present invention.

Exemplarily, the parts by mass of the diethylphosphinate, the ethylbutylphosphinate, the ethylphosphonate, and the monoethylphosphinate in the polymer additive may be analyzed and tested by liquid chromatography. For example, a sample to be tested is dissolved in an aqueous solution of sulfuric acid (with a mass concentration of 30%) at 5 times the sample mass, and then diluted 10-30 fold with a mobile phase for analysis and testing; the mobile phase is a mixed solution of water and methanol in a mass ratio of 9:1, trifluoroacetic acid with a volume content of 0.5% is added, and a ShimNex CS C18 chromatographic column is used at a flow rate of 0.6 mL/min; and the mass content of each component is calculated by an area normalization method.

Preferably, other phosphorus-containing compounds in the polymer additive are ≤ 1.2 parts by mass, and for example, may be 0, 0.01 part, 0.05 part, 0.1 part, 0.2 part, 0.3 part, 0.4 part, 0.5 part, 0.6 part, 0.7 part, 0.8 part, 0.9 part, 1 part, or 1.1 parts, as well as specific point values among the above point values. Due to space limitations and for the sake of brevity, the specific point values included within the range are not exhaustively enumerated in the present invention. 0.05-0.9 part is further preferred.

It should be noted that the other phosphorus-containing compounds are alkali-soluble and are phosphorus-containing compounds different from the diethylphosphinate, the ethylbutylphosphinate, the ethylphosphonate, and the monoethylphosphinate, their parts by mass may be tested by phosphorus nuclear magnetic resonance spectroscopy, and in a phosphorus nuclear magnetic resonance spectrum, an integral area of other peaks except for the diethylphosphinate, the ethylbutylphosphinate, the ethylphosphonate, and the monoethylphosphinate represents the content of the other phosphorus-containing compounds.

Preferably, the polymer additive includes, in parts by mass, the following components:
97.7-99 parts of the diethylphosphinate,
0.5-0.7 part of the ethylbutylphosphinate,
0.1-0.5 part of the ethylphosphonate, and
0.1-0.7 part of the monoethylphosphinate.

Preferably, cations in the diethylphosphinate, the ethylbutylphosphinate, the ethylphosphonate, and the monoethylphosphinate are the same and are selected from any one or a combination of at least two of Al³⁺, Ca²⁺, Cu²⁺, Zn²⁺, Fe²⁺, Fe³⁺, or Ti⁴⁺.

In the present invention, the water-soluble acid value of the polymer additive is ≤ 0.33 mg KOH/g, and for example, may be 0.01 mg KOH/g, 0.1 mg KOH/g, 0.12 mg KOH/g, 0.15 mg KOH/g, 0.18 mg KOH/g, 0.2 mg KOH/g, 0.22 mg KOH/g, 0.25 mg KOH/g, 0.28 mg KOH/g, 0.29 mg KOH/g, 0.3 mg KOH/g, 0.31 mg KOH/g, or 0.32 mg KOH/g, as well as specific point values among the above point values. Due to space limitations and for the sake of brevity, the specific point values included within the range are not exhaustively enumerated in the present invention. The water-soluble acid value is preferably 0.1-0.3 mg KOH/g.

Exemplarily, the water-soluble acid value of the polymer additive may be tested by the following method: uniformly wetting 1 g of a sample to be tested with ethanol (ethanol mass being mₑₜₕₐₙₒₗ), adding water (water mass being m_{water}), performing sealed water boiling at 90°C for 1 h, then cooling to 25°C, performing heat preservation for 30 min, and supplementing water to reach a total mass before the water boiling; and performing filtration to obtain a clear filtrate with a mass of m₁, and testing the acid value of the clear filtrate by a potentiometric titration test method, where a concentration of a potassium hydroxide solution used for titration is 0.05 mol/L, and the water-soluble acid value of the polymer additive=tested acid value×(m_{water}+mₑₜₕₐₙₒₗ)/m₁.

Preferably, an organic acid value of the polymer additive is ≤ 0.05 mg KOH/g, and for example, may be 0.001 mg KOH/g, 0.005 mg KOH/g, 0.01 mg KOH/g, 0.02 mg KOH/g, 0.022 mg KOH/g, 0.025 mg KOH/g, 0.028 mg KOH/g, 0.03 mg KOH/g, 0.032 mg KOH/g, 0.035 mg KOH/g, 0.038 mg KOH/g, 0.04 mg KOH/g, or 0.045 mg KOH/g, as well as specific point values among the above point values. Due to space limitations and for the sake of brevity, the specific point values included within the range are not exhaustively enumerated in the present invention. The organic acid value is further preferably 0.002-0.04 mg KOH/g.

Exemplarily, the organic acid value of the polymer additive may be tested by the following method: uniformly wetting 1 g of a sample to be tested with dichloromethane (dichloromethane mass being m_{dichloromethane}), performing sealed boiling at 90°C for 1 h, then cooling to 25°C, performing heat preservation for 30 min, and supplementing dichloromethane to reach a total mass before the boiling; and performing filtration to obtain a clear filtrate with a mass of m₁, and testing the acid value of the clear filtrate by a potentiometric titration test method, where a concentration of a potassium hydroxide solution used for titration is 0.05 mol/L, and the organic acid value of the polymer additive=tested acid value×m_{dichloromethane}/m₁.

Preferably, a mass content of a sulfate in the polymer additive is 100-600 ppm, and for example, may be 120 ppm, 150 ppm, 200 ppm, 250 ppm, 270 ppm, 300 ppm, 350 ppm, 400 ppm, 420 ppm, 450 ppm, 500 ppm, 550 ppm, or 580 ppm, as well as specific point values among the above point values. Due to space limitations and for the sake of brevity, the specific point values included within the range are not exhaustively enumerated in the present invention. The mass content is further preferably 110-370 ppm.

Exemplarily, the mass content of the sulfate in the polymer additive is tested by an external standard method using an ion chromatography technology with reference to the method in the standard EN 14582: 2007-"Determination of Halogen Content".

Preferably, a 1% thermal weight loss temperature of the polymer additive is ≥ 350°C, and for example, may be 355°C, 358°C, 360°C, 362°C, 365°C, 368°C, 370°C, 372°C, 375°C, 378°C, 382°C, or 385°C, as well as specific point values among the above point values. Due to space limitations and for the sake of brevity, the specific point values included within the range are not exhaustively enumerated in the present invention. The 1% thermal weight loss temperature is further preferably 358-380°C.

In the present invention, the term "1% thermal weight loss temperature" refers to the temperature at which the polymer additive has a weight loss of 1% under heating conditions, which may be tested by a thermogravimetric analyzer (TGA) under an air atmosphere.

Preferably, a D₅₀ particle size of the polymer additive is 1-100 µm, and for example, may be 10 µm, 20 µm, 30 µm, 33 µm, 35 µm, 38 µm, 40 µm, 50 µm, 60 µm, 70 µm, 80 µm, 90 µm, or 95 µm, as well as specific point values among the above point values. Due to space limitations and for the sake of brevity, the specific point values included within the range are not exhaustively enumerated in the present invention. The particle size is further preferably 20-60 µm, furthermore preferably 33-39 µm.

The D₅₀ particle size of the polymer additive refers to the particle size corresponding to a cumulative volume distribution percentage of 50%, which may be determined by a laser particle size analyzer with reference to the standard GB/T 19077-2016: Particle Size Distribution-Laser Diffraction Method.

Preferably, a moisture content of the polymer additive is 0.01-1 wt%, and for example, may be 0.02 wt%, 0.05 wt%, 0.08 wt%, 0.1 wt%, 0.15 wt%, 0.2 wt%, 0.25 wt%, 0.3 wt%, 0.4 wt%, 0.5 wt%, 0.6 wt%, 0.7 wt%, 0.8 wt%, or 0.9 wt%, as well as specific point values among the above point values. Due to space limitations and for the sake of brevity, the specific point values included within the range are not exhaustively enumerated in the present invention. The moisture content is further preferably 0.05-0.3 wt%, furthermore preferably 0.1-0.25 wt%.

Exemplarily, the moisture content of the polymer additive may be tested by an infrared moisture analyzer. For example, the moisture content is automatically tested by a Germany Sartorius MA 35 infrared moisture analyzer after a sample is placed at 120°C for 30 min.

Preferably, a phosphorus content of the polymer additive is 22-25 wt%, and for example, may be 22.2 wt%, 22.5 wt%, 22.8 wt%, 23 wt%, 23.2 wt%, 23.5 wt%, 23.8 wt%, 24 wt%, 24.2 wt%, 24.5 wt%, or 24.8 wt%, as well as specific point values among the above point values. Due to space limitations and for the sake of brevity, the specific point values included within the range are not exhaustively enumerated in the present invention. The phosphorus content is further preferably 23-24 wt%.

Exemplarily, the phosphorus content of the polymer additive may be tested by the following method: dissolving a sample to be tested in an aqueous solution of sulfuric acid (with a mass concentration of 30%), and performing testing with reference to the standard GB/T 11893-1989 "Water Quality-Determination of Total Phosphorus-Ammonium Molybdate Spectrophotometric Method".

In a third aspect, the present invention provides use of the polymer additive as described in the second aspect in a polymer material.

Preferably, the polymer additive is used as a flame retardant in the polymer material.

Preferably, the polymer material includes any one or a combination of at least two of a polyamide, a polyester, a polyurethane, a styrene-based polymer, a polyolefin, a polyphenylene ether, and a polyacrylate, more preferably a polyamide and/or a polyester.

In a fourth aspect, the present invention provides a polymer composition, where the polymer composition includes a polymer matrix and the polymer additive as described in the second aspect.

Preferably, the polymer composition includes, in parts by mass, the following components:
40-99 parts of the polymer matrix, and
5-35 parts of the polymer additive.

Preferably, the polymer matrix is 40-99 parts by mass, and for example, may be 45 parts, 50 parts, 55 parts, 60 parts, 65 parts, 70 parts, 75 parts, 80 parts, 85 parts, 90 parts, 95 parts, or 98 parts, as well as specific point values among the above point values. Due to space limitations and for the sake of brevity, the specific point values included within the range are not exhaustively enumerated in the present invention.

Preferably, the polymer additive is 5-35 parts by mass, and for example, may be 6 parts, 8 parts, 10 parts, 12 parts, 15 parts, 18 parts, 20 parts, 22 parts, 25 parts, 28 parts, 30 parts, 32 parts, or 34 parts, as well as specific point values among the above point values. Due to space limitations and for the sake of brevity, the specific point values included within the range are not exhaustively enumerated in the present invention.

Preferably, the polymer matrix includes a polyamide and/or a polyester.

Preferably, the polyamide includes any one or a combination of at least two of a polyamide resin and a polyamide elastomer.

The polyamide includes any one or a combination of at least two of a condensation product of a dicarboxylic acid and a diamine, a condensation product of ω-amino acid, and a ring-opening polymerization product of lactam. The dicarboxylic acid exemplarily includes, but is not limited to: any one or a combination of at least two of adipic acid, sebacic acid, dodecanedioic acid, terephthalic acid, and isophthalic acid. The diamine exemplarily includes, but is not limited to: any one or a combination of at least two of pentamethylenediamine, hexamethylenediamine, decamethylenediamine, dodecanediamine, butanediamine, p-phenylenediamine, and m-phenylenediamine. The lactam exemplarily includes, but is not limited to: any one or a combination of at least two of caprolactam, octalactam, undecalactam, and dodecalactam. The ω-amino acid exemplarily includes, but is not limited to: any one or a combination of at least two of ω-amino acid formed by ring-opening of the aforementioned lactam, and aminobenzoic acid.

Preferably, the polyamide includes any one or a combination of at least two of polyamide 6 (polycaprolactam), polyamide 11 (polyundecalactam), polyamide 12 (polydodecalactam), polyamide 56 (polyadipoylpentamethylenediamine), polyamide 66 (polyadipoylhexamethylenediamine), polyamide 610 (polysebacoylhexamethylenediamine), polyamide 612 (polydodecanedioylhexamethylenediamine), polyamide 1010 (polysebacoyldecamethylenediamine), polyamide 1012 (polydodecanedioyldecamethylenediamine), polyamide 1212 (polydodecanedioyldodecamethylenediamine), polyamide 6T (polyterephthaloylhexamethylenediamine), polyamide 10T (polyterephthaloyldecamethylenediamine), and PPA (polyp-phthaloylp-phenylenediamine).

Preferably, the polyester includes a condensation product of a dicarboxylic acid and/or a derivative thereof with a diol, where the dicarboxylic acid exemplarily includes, but is not limited to: any one or a combination of at least two of terephthalic acid, isophthalic acid, phthalic acid, succinic acid, adipic acid, suberic acid, azelaic acid, sebacic acid, dodecanedioic acid, cyclohexanedicarboxylic acid, hydrogenated isophthalic acid, and hydrogenated phthalic acid, and the derivative includes an acyl halide (acyl chloride), an ester, an acid anhydride, etc. that are formed from a dicarboxylic acid. The diol exemplarily includes, but is not limited to: any one or a combination of at least two of ethylene glycol, butanediol, and hexanediol.

Exemplarily, the polyester includes polyethylene terephthalate (PET) and/or polybutylene terephthalate (PBT).

It should be noted that the polymer composition of the present invention may further include any other fillers, other additives, etc., that are motivated to be added in the field.

Preferably, the polymer composition further includes a reinforcing material and/or a filler.

Preferably, the reinforcing material includes glass fiber and/or carbon fiber.

Preferably, the reinforcing material in the polymer composition is ≤ 45 parts by mass, and may be 0, 0.5 part, 1 part, 2 parts, 5 parts, 8 parts, 10 parts, 15 parts, 20 parts, 25 parts, 30 parts, 35 parts, 40 parts, 42 parts, or 44 parts, as well as specific point values among the above point values. Due to space limitations and for the sake of brevity, the specific point values included within the range are not exhaustively enumerated in the present invention.

Preferably, the filler includes any one or a combination of at least two of silica, talc, titanium dioxide, barium sulfate, kaolin, calcium sulfate, boehmite, mica, magnesium carbonate, and a glass microbead.

Preferably, the filler in the polymer composition is ≤ 40 parts by mass, and may be 0, 0.5 part, 1 part, 2 parts, 5 parts, 8 parts, 10 parts, 12 parts, 15 parts, 18 parts, 20 parts, 22 parts, 25 parts, 28 parts, 30 parts, 32 parts, 35 parts, or 38 parts, as well as specific point values among the above point values. Due to space limitations and for the sake of brevity, the specific point values included within the range are not exhaustively enumerated in the present invention.

Preferably, the polymer composition further includes, in parts by mass, 0-15 parts of other additives, and the other additives may be 0, 0.1 part, 0.5 part, 1 part, 2 parts, 3 parts, 4 parts, 5 parts, 6 parts, 7 parts, 8 parts, 9 parts, 10 parts, 12 parts, or 14 parts by mass, as well as specific point values among the above point values. Due to space limitations and for the sake of brevity, the specific point values included within the range are not exhaustively enumerated in the present invention.

Preferably, the other additives include any one or a combination of at least two of an antioxidant, an ultraviolet absorber, a lubricant, a nucleating agent, a stabilizer, an antistatic agent, and a colorant.

Preferably, the polymer composition further includes any one or a combination of at least two of an antioxidant, an ultraviolet absorber, a lubricant, a nucleating agent, a stabilizer, an antistatic agent, and a colorant.

Preferably, the antioxidant, the ultraviolet absorber, the lubricant, and the nucleating agent in the polymer composition are each independently 0.01-1.5 parts by mass, and for example, may be 0.05 part, 0.1 part, 0.2 part, 0.3 part, 0.4 part, 0.5 part, 0.6 part, 0.7 part, 0.8 part, 0.9 part, 1 part, 1.2 parts, or 1.4 parts, as well as specific point values among the above point values. Due to space limitations and for the sake of brevity, the specific point values included within the range are not exhaustively enumerated in the present invention.

Preferably, the antioxidant in the polymer composition includes any one or a combination of at least two of a hindered amine antioxidant, a hindered phenol antioxidant, a phosphite ester antioxidant, and a thioester antioxidant.

Exemplarily, the antioxidant in the polymer composition includes any one or a combination of at least two of pentaerythritol tetrakis(β-(3,5-di-tert-butyl-4-hydroxyphenyl)propionate) (antioxidant 1010), n-octadecyl β-(3,5-di-tert-butyl-4-hydroxyphenyl)propionate (antioxidant 1076), *N*,*N*'-bis-(3-(3,5-di-tert-butyl-4-hydroxyphenyl)propionyl)hexamethylenediamine (antioxidant 1098), tris(2,4-di-tert-butylphenyl) phosphite (antioxidant 168), bis(2,4-di-cumylphenyl) pentaerythritol diphosphite (antioxidant 608), 2,6-di-tert-butyl-p-cresol (antioxidant BHT), distearyl β,β-thiodipropionate (antioxidant DSTP), antioxidant 215, and antioxidant 225.

Preferably, the lubricant includes any one or a combination of at least two of an ester lubricant, an alcohol lubricant, a hydrocarbon lubricant, a fatty acid lubricant, a fatty acid amide lubricant, and a metallic soap lubricant.

Preferably, the polymer composition further includes, in parts by mass, 0-15 parts of a synergistic flame retardant, and the synergistic flame retardant may be 0, 0.1 part, 0.5 part, 1 part, 2 parts, 3 parts, 4 parts, 5 parts, 6 parts, 7 parts, 8 parts, 9 parts, 10 parts, 12 parts, or 14 parts by mass, as well as specific point values among the above point values. Due to space limitations and for the sake of brevity, the specific point values included within the range are not exhaustively enumerated in the present invention.

Preferably, the synergistic flame retardant includes any one or a combination of at least two of melamine polyphosphate, a melamine polyphosphate salt, zinc borate, zinc stannate, zinc sulfide, and boehmite.

In one preferred technical solution, the polymer composition includes, in parts by mass, the following components:
40-99 parts of the polymer matrix,
5-35 parts of the polymer additive,
0-45 parts of the reinforcing material,
0-15 parts of the synergistic flame retardant,
0-1.5 parts of the lubricant, and
0-1.5 parts of the antioxidant.

Preferably, a mass percentage content of the polymer matrix in the polymer composition is 40%-99%, and for example, may be 45%, 50%, 55%, 60%, 65%, 70%, 75%, 80%, 85%, 90%, 95%, or 98%, as well as specific point values among the above point values. Due to space limitations and for the sake of brevity, the specific point values included within the range are not exhaustively enumerated in the present invention.

Preferably, a mass percentage content of the polymer additive in the polymer composition is 5%-35%, and for example, may be 6%, 8%, 10%, 12%, 15%, 18%, 20%, 22%, 25%, 28%, 30%, 32%, or 34%, as well as specific point values among the above point values. Due to space limitations and for the sake of brevity, the specific point values included within the range are not exhaustively enumerated in the present invention. The mass percentage content is further preferably 6%-20%.

Exemplarily, a preparation method for the polymer composition includes: subjecting various components of the polymer composition to melt blending and then extrusion to obtain the polymer composition.

Preferably, the melt blending is performed in a screw extruder.

Preferably, the screw extruder is a twin-screw extruder.

Preferably, a temperature of the screw extruder is 180-330°C, and for example, may be 190°C, 200°C, 210°C, 220°C, 230°C, 240°C, 250°C, 260°C, 270°C, 280°C, 290°C, 300°C, 310°C, or 320°C, as well as specific point values among the above point values. Due to space limitations and for the sake of brevity, the specific point values included within the range are not exhaustively enumerated in the present invention.

Preferably, after the extrusion, the method further includes steps of granulation and drying.

Compared with the prior art, the present invention has the following beneficial effects.

In the preparation method for a polymer additive provided by the present invention, through the design of materials such as the antioxidant and the flocculant, the design of process steps and parameters, and their combined effects, the polymer additive with a low acid value and high thermal stability can be obtained. When used as a flame retardant to prepare the polymer composition, the polymer additive can significantly reduce mold scale generated during injection molding and enable the polymer composition to have a lower water boiling precipitate content, thereby greatly improving the stability of the polymer composition under damp-heat conditions and prolonging the service life.

### DETAILED DESCRIPTION OF EMBODIMENTS

The technical solutions of the present invention are further described below through specific embodiments. Those skilled in the art should understand that examples described are merely to facilitate an understanding of the present invention and should not be regarded as specific limitations to the present invention.

The terms "comprise", "include", "have", "contain", or any other variations thereof used herein are intended to cover non-exclusive inclusions. For example, a composition, step, method, product, or device that comprises listed elements is not necessarily limited only to those elements, but may also include other elements not explicitly listed or elements inherent in such composition, step, method, product, or device.

In the following specific embodiments, test methods for parameters of a polymer additive are as follows.

### (1) Test of the contents of a diethylphosphinate, an ethylbutylphosphinate, an ethylphosphonate, and a monoethylphosphinate

The contents were analyzed and tested using a liquid chromatograph (LC20A, Shimadzu, Japan), where a commercially available standard sample of the diethylphosphinate was used, a pure product of the ethylbutylphosphinate (prepared with reference to Example 4 of CN103172668A) was used as a standard sample, a pure product of the ethylphosphonate (prepared with reference to Example 2 of CN104371142A) was used as a standard sample, and a pure product of the monoethylphosphinate (prepared with reference to Example 1 of CN103172668A) was used as a standard sample. The samples to be tested were dissolved in an aqueous solution of sulfuric acid (with a mass concentration of 30%) at 5 times the sample mass, and then diluted 20-fold with a mobile phase for analysis and testing. A mixed solution of water and methanol in a mass ratio of 9:1 was used as the mobile phase, trifluoroacetic acid with a volume content of 0.5% was added, and a chromatographic column used was ShimNex CS C18 5 µm, 4.6×250 mm, at a flow rate of 0.6 mL/min. The mass content of each component was calculated by an area normalization method.

### (2) Content of other phosphorus-containing compounds

A sample to be tested was mixed with a deuterated aqueous solution of deuterated sodium hydroxide (with a mass concentration of 10%) in a mass ratio of 1:30 to make the sample completely dissolved, filtration was performed to obtain a clear solution, the obtained clear solution was measured by a nuclear magnetic resonance spectrometer (NMR, Bruker NMR spectrometer, AVANCE NEO 400 MHz) to obtain a phosphorus nuclear magnetic resonance spectrum, the phosphorus nuclear magnetic resonance spectrum was subjected to integration, and an integral area of other peaks except for the already-known diethylphosphinate, the ethylbutylphosphinate, the ethylphosphonate, and the monoethylphosphinate was considered the content of the other phosphorus-containing compounds.

### (3) Water-soluble acid value

1 g of a sample to be tested was weighed and added into 5.00±0.01 g (mₑₜₕₐₙₒₗ) of ethanol for uniform wetting, then 50±0.01 g (m_{water}) of normal-temperature water was added, weighing was performed with a bottle and a stirrer to obtain a total mass as m₀, sealed water boiling was performed at 90°C for 1 h, then cooling was performed to 25°C, heat preservation was performed for 30 min, and water was supplemented to reach a total mass of m₀; and filtration was performed to obtain a clear filtrate with a mass of m₁, and the acid value of the clear filtrate was tested by a potentiometric titration test method, where a concentration of a potassium hydroxide solution used for titration was 0.05 mol/L, and the water-soluble acid value of the polymer additive=tested acid value×(m_{water}+mₑₜₕₐₙₒₗ)/m₁.

### (4) Organic acid value

1 g of a sample to be tested was weighed and added into 50.0±0.01 g (m_{dichloromethane}) of dichloromethane for uniform wetting, weighing was performed with a bottle and a stirrer to obtain a total mass as m₀, sealed boiling was performed at 90°C for 1 h, then cooling was performed to 25°C, heat preservation was performed for 30 min, and dichloromethane was supplemented to reach a total mass of m₀; and filtration was performed to obtain a clear filtrate with a mass of m₁, and the acid value of the clear filtrate was tested by a potentiometric titration test method, where a concentration of a potassium hydroxide solution used for titration was 0.05 mol/L, and the organic acid value of the polymer additive=tested acid value×m_{dichloromethane}/m₁.

### (5) Mass content of a sulfate

Referring to the method in the standard EN 14582: 2007-"Determination of Halogen Content", measurement was performed by an external standard method using an ion chromatography technology.

### (6) D₅₀ particle size

0.1 g of a sample to be tested was weighed, wetted with 5 g of ethanol, then diluted with 50 mL of water, and tested using a Mastersizer 3000 laser particle size analyzer.

### (7) Moisture content

A sample to be tested was placed in an infrared moisture analyzer (MA 35, Sartorius, Germany) at 105°C for 30 min, and then the water content was automatically tested.

### (8) Phosphorus content

0.1 g of a sample to be tested was weighed, added into 2 g of an aqueous solution of sulfuric acid (with a mass concentration of 30%) for dissolution, and tested with reference to the standard GB/T 11893-1989 "Water Quality-Determination of Total Phosphorus-Ammonium Molybdate Spectrophotometric Method".

### (9) 1% thermal weight loss temperature

10 mg of a sample to be tested was weighed and tested using a thermogravimetric analyzer (TGA, NETZSCH TG 209 F3, Germany) at a heating rate of 20°C/min, with nitrogen as a protective gas and air as a purge gas, and the temperature corresponding to the weight loss of 1% was tested.

In the following specific embodiments of the present invention, all materials for which preparation methods are not provided are commercially available chemicals, and specific information for some materials is as follows:

| | Brand and manufacturer |
|---|---|
| Antioxidant 1010 | RIANOX 1010, Tianjin Rianlon New Materials Co., Ltd. , China |
| Antioxidant 168 | RIANOX 168, Tianjin Rianlon New Materials Co., Ltd. , China |
| Flocculant: anionic polyacrylamide | Gongyi Xinqi Polymer Co., Ltd. , China |
| Polyamide 66 (PA66) | PA66 M2000, Guangdong Xinhui Meida Nylon Co., Ltd. , China |
| Polyamide 6 (PA6) | PA6 EPR24, Shenma Industrial Co., Ltd. , China |
| Melamine polyphosphate (MPP) | BUDIT 3141, Budenheim, Germany |
| Glass fiber | ECS10-03-568H, China Jushi Co., Ltd. |
| Lubricant | TR044W, Struktol, Germany |
| Antioxidant 1098 | RIANOX 1098, Tianjin Rianlon New Materials Co., Ltd. , China |

The polymer additive and the preparation method therefor in the present invention are described in detail below by taking multiple examples as examples, but the polymer additive and the preparation method therefor are not limited to these examples.

### Examples 1-11 and Comparative Examples 1-4

A polymer additive and a preparation method therefor are provided. The preparation method is as follows:
(1) placing 31.8 kg of a sodium hypophosphite monohydrate solid, 50 kg of water, 500 g of sodium persulfate, antioxidant 1010 with a mass of m₁, and antioxidant 168 with a mass of m₂ into a high-pressure reactor, performing nitrogen displacement 3 times, maintaining ethylene at a constant pressure of 1.5 MPa using a pressure reducer, heating up to 95°C, performing heat preservation for 4 h, continuously supplementing 2,500 g of a 20% aqueous solution of sodium persulfate during the heat preservation for 4 h, then performing heat preservation at 95°C for 1 h, and performing cooling venting to obtain an aqueous solution of sodium diethylphosphinate;
(2) diluting the aqueous solution of sodium diethylphosphinate obtained in the step (1) to a sodium diethylphosphinate mass content of 20% (containing 6 mol of sodium diethylphosphinate), heating up to temperature T₁, continuously adding dropwise an aqueous solution of aluminum sulfate (containing 1 mol of aluminum sulfate, with a mass content of 28%) within 1 h, and adjusting the pH value with a potassium hydroxide solution (with a mass content of 5%) to obtain an aluminum diethylphosphinate slurry; and
(3) adding an aqueous solution of a flocculant formulated from anionic polyacrylamide with a mass of m₃ and 50 g of water into the aluminum diethylphosphinate slurry obtained in the step (2) at 50°C, stirring the same to reach a flocculation state, performing filtration, washing a filter cake 5 times with water at 3 times the mass, and drying the filter cake to a constant weight at 110°C to obtain the polymer additive.

Specific process parameters of the preparation method and relevant data of the prepared polymer additive are shown in Tables 1 and 2.

**Table 1**

| | | Exa mple 1 | Exa mple 2 | Exa mple 3 | Exa mple 4 | Exa mple 5 | Exa mple 6 | Exa mple 7 | Exa mple 8 | Exa mple 9 |
|---|---|---|---|---|---|---|---|---|---|---|
| Step (1) | m₁ (g) | 25 | 25 | 25 | 25 | 0 | 8 | 120 | 6 | 150 |
| | m₂ (g) | 25 | 25 | 25 | 25 | 50 | 8 | 120 | 6 | 150 |
| Step (2) | T₁ (°C) | 50 | 50 | 40 | 60 | 50 | 50 | 50 | 50 | 50 |
| | pH value | 3.5 | 3.8 | 3.6 | 3.7 | 3.7 | 3.5 | 3.5 | 3.5 | 3.5 |
| Step (3) | m3 (g) | 0.5 | 0.5 | 0.5 | 0.5 | 0.2 | 0.5 | 2 | 0.5 | 0.5 |
| Polymer additive number | | A1 | A2 | A3 | A4 | A5 | A6 | A7 | A8 | A9 |
| Aluminum diethylphosphinate (parts) | | 98.78 | 98.79 | 98.76 | 98.75 | 98.87 | 98.83 | 98.38 | 98.62 | 97.73 |
| Aluminum ethylbutylphosphina te (parts) | | 0.61 | 0.65 | 0.65 | 0.62 | 0.65 | 0.62 | 0.62 | 0.62 | 0.62 |
| Aluminum ethylphosphonate (parts) | | 0.16 | 0.13 | 0.13 | 0.15 | 0.13 | 0.19 | 0.10 | 0.38 | 0.11 |
| Aluminum monoethylphosphina te (parts) | | 0.15 | 0.14 | 0.15 | 0.15 | 0.12 | 0.12 | 0.33 | 0.15 | 0.67 |
| Other phosphorus-containing compounds (parts) | | 0.30 | 0.29 | 0.31 | 0.33 | 0.23 | 0.24 | 0.57 | 0.23 | 0.87 |
| Sulfate (ppm) | | 278 | 362 | 179 | 288 | 117 | 251 | 228 | 265 | 194 |
| Water-soluble acid value (mg KOH/g) | | 0.202 | 0.211 | 0.195 | 0.267 | 0.110 | 0.270 | 0.272 | 0.283 | 0.294 |
| Organic acid value (mg KOH/g) | | 0.015 | 0.028 | 0.006 | 0.012 | 0.027 | 0.021 | 0.029 | 0.026 | 0.036 |
| D₅₀ particle size (µm) | | 36.5 | 38.4 | 35.7 | 36.2 | 33.8 | 35.6 | 35.9 | 36.1 | 35.2 |
| Moisture content (wt%) | | 0.12 | 0.15 | 0.22 | 0.17 | 0.17 | 0.13 | 0.15 | 0.20 | 0.16 |
| Phosphorus content (wt%) | | 23.7 | 23.4 | 23.9 | 23.2 | 23.8 | 23.7 | 23.6 | 23.5 | 23.8 |
| 1% thermal weight loss temperature (°C) | | 370 | 368 | 370 | 363 | 372 | 359 | 358 | 360 | 359 |

**Table 2**

| | | Exam ple 10 | Exam ple 11 | Comp arativ e Exam ple 1 | Comp arativ e Exam ple 2 | Comp arativ e Exam ple 3 | Comp arativ e Exam ple 4 |
|---|---|---|---|---|---|---|---|
| Step (1) | m₁ (g) | 25 | 25 | 25 | 25 | 0 | 25 |
| | m₂ (g) | 25 | 25 | 25 | 25 | 0 | 25 |
| Step (2) | T₁ (°C) | 35 | 65 | 50 | 50 | 50 | 50 |
| | pH value | 3.5 | 3.5 | 4.0 | 3.3 | 3.5 | 3.5 |
| Step (3) | m₃ (g) | 0.5 | 0.5 | 0.5 | 0.5 | 0.5 | 0 |
| Polymer additive number | | A10 | A11 | D1 | D2 | D3 | D4 |
| Aluminum diethylphosphinate (parts) | | 98.50 | 98.77 | 98.80 | 98.74 | 98.61 | 98.66 |
| Aluminum ethylbutylphosphinate (parts) | | 0.62 | 0.65 | 0.57 | 0.58 | 0.55 | 0.61 |
| Aluminum ethylphosphonate (parts) | | 0.43 | 0.15 | 0.24 | 0.13 | 0.20 | 0.33 |
| Aluminum monoethylphosphinate (parts) | | 0.13 | 0.10 | 0.10 | 0.15 | 0.12 | 0.15 |
| Other phosphorus-containing compounds (parts) | | 0.32 | 0.33 | 0.29 | 0.40 | 0.52 | 0.25 |
| Sulfate (ppm) | | 348 | 280 | 367 | 281 | 272 | 320 |
| Water-soluble acid value (mg KOH/g) | | 0.317 | 0.328 | 0.339 | 0.429 | 0.382 | 0.350 |
| Organic acid value (mg KOH/g) | | 0.049 | 0.043 | 0.052 | 0.056 | 0.056 | 0.061 |
| D₅₀ particle size (µm) | | 33.2 | 36.1 | 34.9 | 34.6 | 33.1 | 35.8 |
| Moisture content (wt%) | | 0.14 | 0.20 | 0.18 | 0.15 | 0.24 | 0.10 |
| Phosphorus content (wt%) | | 23.7 | 23.7 | 23.4 | 23.9 | 23.3 | 22.9 |
| 1% thermal weight loss temperature (°C) | | 353 | 350 | 341 | 330 | 335 | 337 |

It can be known from Table 1 that through the design of the preparation method for the polymer additive of the present invention, especially through the use of the antioxidant and the flocculant and the control of the pH value in a double decomposition reaction system in the step (2), the polymer additive with a low acid value and high thermal stability is prepared, with a water-soluble acid value ≤ 0.33 mg KOH/g and a 1% thermal weight loss temperature ≥ 350°C. The polymer additive includes, in parts by mass, the following components: 96-99.88 parts of a diethylphosphinate, 0.1-2 parts of an ethylbutylphosphinate, 0.01-1 part of an ethylphosphonate, and 0.01-1 part of a monoethylphosphinate.

In Table 2, the pH value of the reaction system in the step (2) of Comparative Examples 1-2 exceeds the range of 3.5-3.8 as defined by the present invention, the antioxidant is not used in Comparative Example 3, and the flocculant is not added in Comparative Example 4, leading to an obvious increase in both the water-soluble acid value and organic acid value of the polymer additive, a decrease in 1% thermal weight loss temperature, and a decrease in thermal stability.

The use of the polymer additive of the present invention is described in detail below by taking application examples as examples, but the use of the polymer additive is not limited to these application examples.

### Application Examples 1-11 and Comparative Application Examples 1-4

A polymer composition, specifically a polyamide composition, is provided, where the types and use amounts of various components are shown in Tables 3 and 4, and the unit for the use amount of each component is "parts by mass".

A preparation method for the polyamide composition includes: mixing polyamide 66, polyamide 6, glass fiber, a polymer additive, an antioxidant, and a lubricant according to formulation amounts to obtain a premix; adding the premix into a twin-screw extruder, where a screw rotation speed of the twin-screw extruder is 380 rpm, and temperatures of zones 1-12 are respectively 90°C, 180°C, 260°C, 250°C, 230°C, 230°C, 220°C, 220°C, 220°C, 220°C, 260°C, and 260°C; and performing melt mixing and extrusion granulation to obtain a polyamide composition particle.

The following performance tests are conducted on the polyamide composition.
(1) Test of the phosphorus content in water boiling: 50 g of the polyamide composition particle was weighed, added into 500 mL of hot water at 90°C, boiled in the water for 1 h, cooled to normal temperature, and filtered, and the phosphorus content of a filtrate was determined by an ammonium molybdate spectrophotometric method in GB/T 11893-1989.
(2) Mold scale test method: The polyamide composition particle was continuously subjected to injection molding at a modulus of 150 using an injection molding machine at injection molding temperatures of 290°C, 285°C, 280°C, and 260°C, and a mold scale sample was finally taken out and collected from a mold and weighed using an analytical balance.

Various test data are shown in Tables 3 and 4.

**Table 3**

| | | Appli catio n Exam ple 1 | Appli catio n Exam ple 2 | Appli catio n Exam ple 3 | Appli catio n Exam ple 4 | Appli catio n Exam ple 5 | Appli catio n Exam ple 6 | Appli catio n Exam ple 7 | Appli cation Exam ple 8 | Appl icati on Exa mple 9 |
|---|---|---|---|---|---|---|---|---|---|---|
| Polyami de | PA66 | 50 | 50 | 50 | 50 | 45 | 50 | - | 50 | 50 |
| | PA6 | 6 | 6 | 6 | 6 | 6 | 6 | 56 | 6 | 6 |
| Polymer additive | Type | A1 | A2 | A3 | A4 | A5 | A6 | A7 | A8 | A9 |
| | Use amount | 14 | 14 | 14 | 14 | 14 | 14 | 12 | 14 | 14 |
| Glass fiber | | 25 | 25 | 25 | 25 | 30 | 25 | 25 | 25 | 25 |
| MPP | | 4 | 4 | 4 | 4 | 4 | 4 | 6 | 4 | 4 |
| Lubricant | | 0.5 | 0.5 | 0.5 | 0.5 | 0.5 | - | 0.5 | 0.5 | 0.5 |
| Antioxid | 1098 | 0.25 | 0.25 | 0.25 | 0.25 | 0.25 | 0.1 | - | 0.25 | 0.25 |
| ant | 168 | 0.25 | 0.25 | 0.25 | 0.25 | 0.25 | 0.1 | - | 0.25 | 0.25 |

| Performance tests | | | | | | | | | | |
|---|---|---|---|---|---|---|---|---|---|---|
| Mold scale (mg) | | 5.3 | 4.2 | 5.0 | 4.7 | 4.3 | 5.4 | 6.0 | 6.5 | 6.8 |
| Phosphorus content in water boiling (ppm) | | 402 | 410 | 379 | 451 | 327 | 464 | 438 | 486 | 491 |

**Table 4**

| | | Applica tion Exampl e 10 | Applica tion Exampl e 11 | Compar ative Applica tion Exampl e 1 | Compar ative Applica tion Exampl e 2 | Compar ative Applica tion Exampl e 3 | Compar ative Applica tion Exampl e 4 |
|---|---|---|---|---|---|---|---|
| Polyami de | PA66 | 50 | 50 | 50 | 50 | 50 | 50 |
| | PA6 | 6 | 6 | 6 | 6 | 6 | 6 |
| Polymer additive | Type | A10 | A11 | D1 | D2 | D3 | D4 |
| | Use amount | 14 | 14 | 14 | 14 | 14 | 14 |
| Glass fiber | | 25 | 25 | 25 | 25 | 25 | 25 |
| MPP | | 4 | 4 | 4 | 4 | 4 | 4 |
| Lubricant | | 0.5 | 0.5 | 0.5 | 0.5 | 0.5 | 0.5 |
| Antioxid ant | 1098 | 0.25 | 0.25 | 0.25 | 0.25 | 0.25 | 0.1 |
| | 168 | 0.25 | 0.25 | 0.25 | 0.25 | 0.25 | 0.1 |

| Performance tests | | | | | | | |
|---|---|---|---|---|---|---|---|
| Mold scale (mg) | | 7.7 | 8.0 | 8.9 | 8.5 | 10.8 | 9.6 |
| Phosphorus content in water boiling | | 519 | 527 | 540 | 554 | 580 | 570 |
| (ppm) | | | | | | | |

It can be known from the data in Tables 3 and 4 that when the polymer additive provided by the present invention is used as a flame retardant in the polyamide composition, mold scale generated during injection molding is significantly reduced and is ≤ 8.0 mg, and the phosphorus content of the polyamide composition in water boiling is ≤ 527 ppm, thereby reducing the content of a water boiling precipitate, improving the stability of the polyamide composition under damp-heat conditions, and prolonging the service life.

It can be known from the test data in Table 4 that since the polymer additives in Comparative Examples 1-4 have a high acid value and poor thermal stability, when used as a flame retardant in the polyamide composition, they lead to high mold scale during injection molding, a high phosphorus content in water boiling, and insufficient use stability under damp-heat conditions.

The applicant declares that the polymer additive and the preparation method therefor, and the polymer composition containing the same of the present invention are illustrated by the above examples, but the present invention is not limited to the above examples, that is, it does not mean that the present invention needs to rely on the above examples to be implemented. Those skilled in the art should understand that any improvements to the present invention, equivalent substitutions of raw materials for products of the present invention, additions of auxiliary ingredients, selections of specific methods, etc., all fall within the protection scope and disclosure scope of the present invention.

## Claims

1. A preparation method for a polymer additive, comprising the following steps:
(1) allowing an aqueous solution of a hypophosphite and an antioxidant to carry out a free radical reaction with ethylene in the presence of an initiator to obtain an aqueous solution of a diethylphosphinate;
(2) mixing the aqueous solution of the diethylphosphinate, an aqueous solution of a metal salt, and an alkali solution to carry out a reaction under a condition of a pH value of 3.5-3.8 to obtain a diethylphosphinate metal salt slurry; and
(3) mixing and stirring the diethylphosphinate metal salt slurry and a flocculant to obtain a diethylphosphinate metal salt flocculate; and filtering, washing, and drying the diethylphosphinate metal salt flocculate to obtain the polymer additive.

2. The preparation method according to claim 1, wherein the hypophosphite comprises sodium hypophosphite and/or potassium hypophosphite;
preferably, a mass percentage content of the hypophosphite in the aqueous solution of the hypophosphite is 10-60%, further preferably 30-40%;
preferably, the antioxidant comprises any one or a combination of at least two of a hindered amine antioxidant, a hindered phenol antioxidant, a phosphite ester antioxidant, and a thioester antioxidant, further preferably any one or a combination of at least two of a hindered phenol antioxidant, a phosphite ester antioxidant, and a thioester antioxidant;
preferably, the antioxidant comprises any one or a combination of at least two of pentaerythritol tetrakis(β-(3,5-di-tert-butyl-4-hydroxyphenyl)propionate), n-octadecyl β-(3,5-di-tert-butyl-4-hydroxyphenyl)propionate, *N*,*N*'-bis-(3-(3,5-di-tert-butyl-4-hydroxyphenyl)propionyl)hexamethylenediamine, tris(2,4-di-tert-butylphenyl) phosphite, 2,6-di-tert-butyl-p-cresol, and distearyl β,β-thiodipropionate; and
preferably, a mass ratio of the hypophosphite to the antioxidant is 100:(0.02-1.2), further preferably 100:(0.05-1).

3. The preparation method according to claim 1, wherein the initiator comprises any one or a combination of at least two of an organic peroxide, a persulfate, an azo initiator, and a photoinitiator; and
preferably, a mass ratio of the hypophosphite to the initiator is 100:(0.1-5).

4. The preparation method according to claim 1, wherein a temperature of the free radical reaction is 70-120°C, preferably 80-110°C, and further preferably 90-105°C;
preferably, the free radical reaction is carried out under a protective atmosphere; and
preferably, the protective atmosphere comprises a nitrogen atmosphere and/or an argon atmosphere.

5. The preparation method according to claim 1, wherein the metal salt comprises a metal sulfate and/or a metal chloride, preferably a metal sulfate;
preferably, a metal in the metal salt comprises any one or a combination of at least two of Al, Ca, Cu, Zn, Fe, and Ti, further preferably Al;
preferably, the alkali solution comprises a sodium hydroxide solution and/or a potassium hydroxide solution; and
preferably, a temperature of the reaction in the step (2) is 20-80°C, further preferably 40-60°C.

6. The preparation method according to claim 1, wherein the flocculant comprises anionic polyacrylamide and/or nonionic polyacrylamide;
preferably, based on a theoretical mass of the diethylphosphinate metal salt as 100%, a mass of the flocculant is 0.01-0.5%;
preferably, a temperature of the mixing in the step (3) is 40-60°C; and
preferably, a number of times of the washing in the step (3) is ≥ 4 times.

7. A polymer additive, prepared by the preparation method according to any one of claims 1-6, wherein a water-soluble acid value of the polymer additive is ≤ 0.33 mg KOH/g; and
the polymer additive comprises, in parts by mass, the following components:
96-99.88 parts of a diethylphosphinate,
0.1-2 parts of an ethylbutylphosphinate,
0.01-1 part of an ethylphosphonate, and
0.01-1 part of a monoethylphosphinate.

8. The polymer additive according to claim 7, wherein the water-soluble acid value of the polymer additive is 0.1-0.3 mg KOH/g;
preferably, an organic acid value of the polymer additive is ≤ 0.05 mg KOH/g, further preferably 0.002-0.04 mg KOH/g;
preferably, a mass content of a sulfate in the polymer additive is 100-600 ppm, further preferably 110-370 ppm;
preferably, a 1% thermal weight loss temperature of the polymer additive is ≥ 350°C;
preferably, a D₅₀ particle size of the polymer additive is 1-100 µm, further preferably 20-60 µm, and furthermore preferably 33-39 µm;
preferably, a moisture content of the polymer additive is 0.01-1 wt%, further preferably 0.05-0.3 wt%, and furthermore preferably 0.1-0.25 wt%; and
preferably, a phosphorus content of the polymer additive is 22-25 wt%, further preferably 23-24 wt%.

9. Use of the polymer additive according to claim 7 or 8 in a polymer material, wherein
preferably, the polymer additive is used as a flame retardant in the polymer material.

10. A polymer composition, comprising a polymer matrix and the polymer additive according to claim 7 or 8, wherein
preferably, the polymer composition comprises, in parts by mass, the following components:
40-99 parts of the polymer matrix, and
5-35 parts of the polymer additive; and
preferably, the polymer matrix comprises a polyamide and/or a polyester.
